# EUROPÄISCHE PATENTSCHRIFT

(11) **EP 1 900 619 B1**
(45) Veröffentlichungstag und Bekanntmachung des Hinweises auf die Patenterteilung: **27.02.2013**
(21) Anmeldenummer: 07115781.2
(22) Anmeldetag: 06.09.2007
(51) Int. Cl.: B62D 53/08, F16B 5/02, F16B 39/24

(54) **Anordnung eines Lagerbocks auf einer Montageplatte**
Bearing support assembly on a mounting board
Agencement d'un support de palier sur une plaque de montage

(30) Priorität: 18.09.2006 DE 102006044421
(43) Veröffentlichungstag der Anmeldung: 19.03.2008
(73) Patentinhaber: Jost-Werke GmbH & Co. KG, 63263 Neu-Isenburg (DE)
(72) Erfinder: Algüera, José Manuel Gallego, 63739, Aschaffenburg (DE)
(74) Vertreter: Fuchs

(56) Entgegenhaltungen:
- EP-A- 0 062 271
- EP-A- 0 538 893
- DE-A1- 3 611 245
- DE-A1- 3 715 204
- DE-A1- 10 044 059
- DE-U1- 8 308 064

## Beschreibung

Die Erfindung betrifft ein Verfahren zum Montieren eines Lagerbocks einer Kupplungsplatte auf einer Montageplatte, wobei der Lagerbock eine brückenartige Form aufweist, an seinem gegenüber liegenden vorderen und hinteren Ende jeweils mit Bohrungen zur Aufnahme von Befestigungsschrauben versehen ist und mittels der Befestigungsschrauben an der Montageplatte ortsfest gehalten ist, und die Kupplungsplatte in einem mittleren Bereich an dem Lagerbock angreift, wobei die Befestigung des Lagerbocks an der Montageplatte zusätzlich mindestens ein Formschlusselement umfasst.

Die Kupplungsplatte bildet zusammen mit einer daran angebrachten Verschlussmechanik und den Lagerböcken die Sattelkupplung eines Zugfahrzeugs.

Die Montageplatte wird an ein Fahrzeugchassis angeschraubt und trägt die zwei seitlich der Kupplungsplatte angeordneten Lagerböcke, wobei diese mit ihren Befestigungsschrauben fest an der Montageplatte verschraubt sind. Diese Verschraubung muss so ausgelegt sein, dass sie eine ausreichende Vorspannkraft zulässt, um zwischen der Lagerbockunterseite und der Auflagefläche der Montageplatte eine hohe Normalkraft und daraus resultierend dauerhaft einen Reibschluss zu erzeugen. Dieser Reibschluss muss trotz der im Fahrbetrieb auftretenden Kräfte, insbesondere der Querkräfte bei Kurvenfahrten und Bremsungen, aufrechterhalten bleiben.

Aus der EP 0538893 ist eine Anordnung eines Lagerbocks nach dem Oberbegriff des Anspruchs 1 bekannt.

Aus der DE 199 52 997 A1 ist beispielsweise ein Lagerbock bekannt, der sich bei einer senkrechten Belastung nicht oder lediglich minimal verformt. Diese aus dem Stand der Technik bekannten Lagerböcke sind selbst tragend. Ihre Unterseite stellt meist eine gerade Linie dar, so dass sich der Lagerbock bei starker senkrechter Beanspruchung gleichmäßig über seine linienartige Kontaktfläche an der Montageplatte abstützen kann. Die darin verwendeten Befestigungsschrauben müssen demnach nur noch die senkrechten Kräfte aufnehmen, die sich aus deren Vorspannung ergeben, sowie Betriebskräfte, die entstehen, wenn an der Sattelkupplung Zugkräfte nach oben wirken.

Eine derartige Befestigung des Lagerbocks auf der Montageplatte ist jedoch kaum für neuartige Lagerböcke geeignet, die nicht über eine gerade durchgehende Auflagefläche auf ihrer Unterseite verfügen, sondern lediglich im Bereich der Verschraubung aufliegen und in ihrem mittleren Bereich freitragend und beabstandet zur der Montageplatte ausgeformt sind. Sie können sich daher dort, wo erfahrungsgemäß die größten senkrechten Kräfte auftreten, nämlich in der Mitte, nicht an der Montageplatte abstützen. Werden diese Lagerböcke stark belastet, verformen sie sich mangels mittiger Abstützung stark, das heißt, sie biegen sich nach unten durch. Dadurch bedingt, versuchen beide Enden des Lagerbocks jeweils nach vorne und nach hinten auszuweichen und es entstehen aufgrund der geometrischen Verhältnisse bei bereits geringen senkrechten Kräften sehr hohe Horizontalkräfte. Um diese Horizontalkräfte aufnehmen zu können, müssten die Anzugsmomente der Schrauben, die letztendlich den Reibschluss sicherstellen, erheblich erhöht werden. Dies ist jedoch aufgrund der Belastbarkeiten der Werkstoffe und der zur Verfügung stehenden Bauräume nicht ohne weiteres möglich. Bei den im Fahrbetrieb auftretenden hohen Querkräften kann es dadurch bei dieser Bauweise zu einem Verrutschen des Lagerbocks und daraus resultierend mit der Zeit sogar zu einem Lösen der Schraubverbindung kommen. Die Sattelkupplung könnte sich von der Montageplatte trennen und dadurch auch der Auflieger von dem Zugfahrzeug.

Aus der DE 41 35 288 A1 ist bekannt geworden, an den Lagerböcken und einem auf der Montageplatte befestigten Bauhöhenadapter zueinander komplementäre Strukturen zum Abfangen der auftretenden Kräfte auszuformen. Beim Aufsetzen der Lagerböcke greifen die füreinander vorgesehenen Strukturen ineinander. Das Einbringen der Strukturen in die als Gussteile gefertigten Lagerböcke beziehungsweise den Bauhöhenadapter führt jedoch zu einem erheblichen technischen Mehraufwand und entsprechend hohen Produktionskosten.

Demzufolge lag der Erfindung die Aufgabe zugrunde, eine auch unter den maximalen zu erwartenden Betriebskräften sichere Befestigung eines Lagerbocks an einer Montageplatte bei einem geringen fertigungstechnischen Aufwand bereitzustellen.

Die Aufgabe wird erfindungsgemäß durch die Merkmale des Anspruchs 1 gelöst.

Eine günstige Anordnung umfasst auf der Unterseite des Lagerbocks eine Vertiefung, in welche eine mit einer Ringzacke ausgeformte Scheibe eingesetzt ist. Dabei ist die Scheibe mit ihrer oberen ebenen Kontaktfläche in die Vertiefung eingesetzt und steht mit der Ringzacke nach unten aus der Vertiefung hervor. Die Vertiefung sorgt für eine seitliche Fixierung der Scheibe sowohl während der Montage als auch im Fahrbetrieb. Bei der Montage stößt die Ringzacke während des Festziehens der Mutter in das Material der Montageplatte ein und erzeugt den Formschluss. Dieser findet bei der vorstehend beschriebenen Ausführungsform jedoch zwischen der Scheibe und der Montageplatte statt und somit nur indirekt zwischen dem Lagerbock und der Montageplatte.

Gemäß einer anderen bevorzugten Ausführungsform ist zwischen der Unterseite des Lagerbocks und der Montageplatte eine mit einer doppelseitigen Ringzacke ausgeformte Scheibe eingesetzt. In diesem Fall ist keine Vertiefung zur seitlichen Fixierung der Scheibe vorhanden, wodurch diese Ausführungsform einen verminderten Fertigungsaufwand bei der Herstellung der Lagerböcke verursacht. Die seitliche Fixierung der Scheibe erfolgt vielmehr durch ein Eindrücken der Ringzacke sowohl in die Unterseite des Lagerbocks als auch in die Oberseite der Montageplatte.

Die für diese Ausführungsformen verwendete Scheibe sollte aus einem gehärteten Stahl gefertigt sein, so dass ein Eindringen in die jeweiligen Oberflächen der Montageplatte und/oder des Lagerbocks gewährleistet ist. Aufgrund der von dem Lagerbock getrennten Bauweise ist ein spezielles Härten der Scheibe jedoch mit geringem Aufwand möglich, da die Scheiben gesondert bearbeitet werden können.

Hinsichtlich ihrer Geometrie sollte die Scheibe darüber hinaus rund und konzentrisch um mindestens eine der Bohrungen angeordnet sein, so dass über die jeweilige Befestigungsschraube und Mutter eine gleichmäßige Kraft auf die jeweilige Scheibe ausgeübt wird und ein gleichmäßiges Eindringen in die Montageplatte und/oder den Lagerbock erfolgt.

Zum besseren Verständnis wird die Erfindung nachfolgend anhand von acht Figuren näher erläutert. Dabei zeigen die:
- **Fig. 1:**: eine Seitenansicht auf eine Sattelkupplung mit einem auf eine Montageplatte aufgeschraubten Lagerbock;
- **Fig. 2:**: einen Querschnitt durch das vordere oder hintere Ende eines Lagerbocks mit einer daran ausgebildeten Ringzacke vor und nach der Montage;
- **Fig. 3:**: Beispiel eines Querschnitts durch das vordere oder hintere Ende eines Lagerbocks mit einer daran ausgebildeten Ausnehmung vor und nach der Montage das nicht Teil der Erfindung bildet;
- **Fig. 4:**: Beispiel eines Querschnitts durch das vordere oder hintere Ende eines Lagerbocks mit einer daran ausgebildeten Ausnehmung und einer dazu komplementären Mutter nach der Montage das nicht Teil der Erfindung bildet;
- **Fig. 5:**: Beispiel eines durch das vordere oder hintere Ende eines Lagerbocks mit einem daran ausgebildeten Dom und einer dazu komplementären Mutter nach der Montage das nicht Teil der Erfindung bildet;
- **Fig. 6:**: einen Querschnitt durch das vordere oder hintere Ende eines Lagerbocks mit einer Vertiefung und darin eingesetzter Scheibe mit Ringzacke vor der Montage;
- **Fig. 7:**: einen Querschnitt durch das vordere oder hintere Ende eines Lagerbocks mit doppelseitiger Ringzacke der Scheibe und
- **Fig. 8:**: Beispiel eines Querschnitts durch das vordere oder hintere Ende eines Lagerbocks mit in die Bohrung eingesetzter Passhülse das nicht Teil der Erfindung bildet.

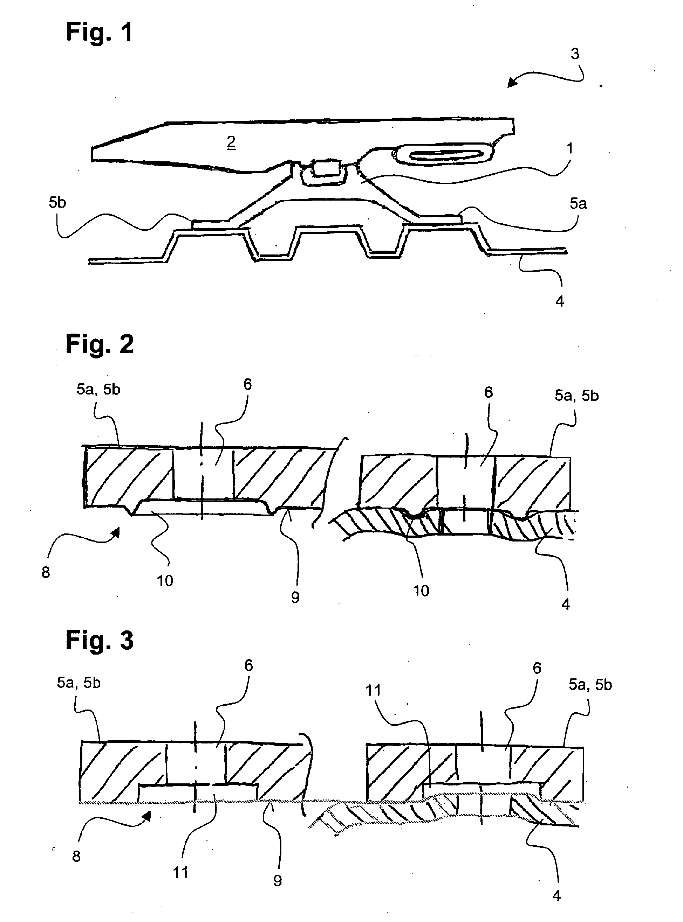

Die Figur 1 zeigt eine Sattelkupplung 3 umfassend eine Kupplungsplatte 2 und zwei die Kupplungsplatte 2 tragende Lagerböcke 1, von denen in der Seitenansicht lediglich der vordere Lagerbock 1 sichtbar ist. Die Lagerböcke 1 weisen eine brückenförmige umgedrehte U-Form auf und stehen mit ihrem vorderen Ende 5a und ihrem hinteren Ende 5b auf einer Montageplatte 4 auf, die wiederum an ein nicht gezeigtes Fahrzeugchassis geschraubt ist. Die Kupplungsplatte 2 greift in einem mittleren Bereich zwischen dem vorderen und hinteren Ende 5a, 5b an den Lagerböcken 1 an. Dieser mittlere Bereich ist vertikal beabstandet zu der Montageplatte 4.

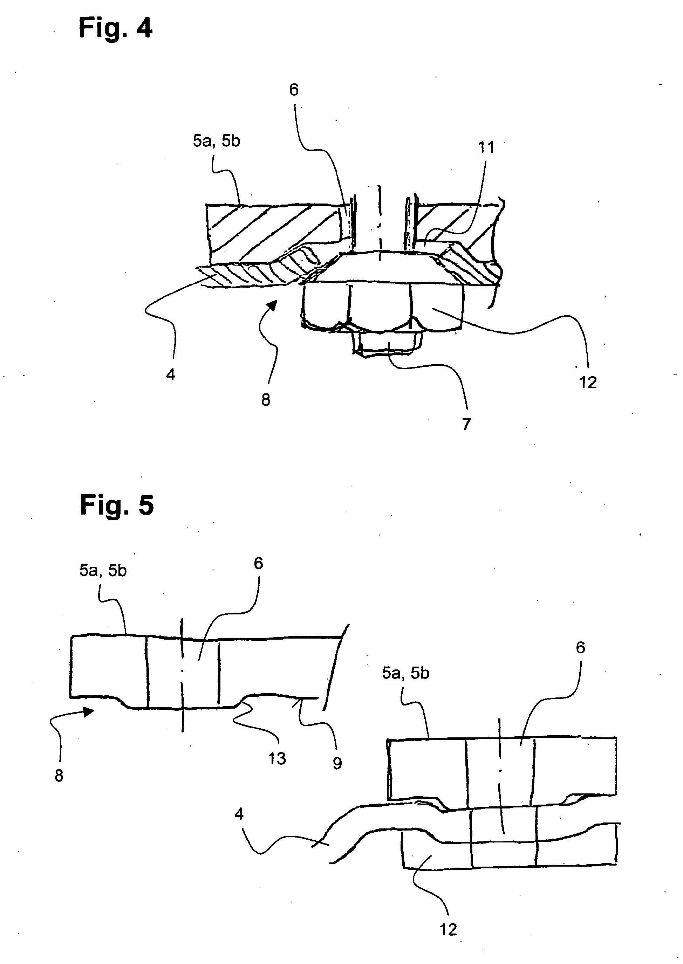

Die Befestigung des Lagerbocks 1 erfolgt jeweils durch Bohrungen 6 in dem vorderen und hinteren Ende 5a, 5b, in welche Befestigungsschrauben 7 eingesteckt und mit einer Mutter 12 angezogen sind, wie besonders gut in der Ansicht der Figur 4 zu sehen ist.

In der Figur 2 ist ein Querschnitt durch ein vorderes oder hinteres Ende 5a, 5b eines Lagerbocks 1 vor und nach der Montage an eine Montageplatte 4 dargestellt. Auf der Unterseite 9 des vorderen oder hinteren Endes 5a, 5b ist als zusätzliches Formschlusselement 8 zu den Befestigungsschrauben 7 eine konzentrisch um die Bohrung 6 verlaufende Ringzacke 10 ausgebildet. Vorzugsweise ist dabei der innerhalb der Ringzacke 10 liegende Bereich der Unterseite 9 ausgenommen, um zusätzlichen freien Bauraum zu schaffen, in welchen Material der Montageplatte 4 hineingedrückt werden kann. Das Einpressen der Ringzacke 10 erfolgt durch ein Festziehen der in der jeweiligen Bohrung 6 eingesetzten hier nicht gezeigten Befestigungsschraube 7 beziehungsweise deren Mutter 12.

Die Figur 3 zeigt ein Beispiel, bei welchem als zusätzliches Formschlusselement 8 anstelle einer Ringzacke 10 um die Bohrung 6 auf der Unterseite 9 des vorderen oder hinteren Endes 5a, 5b eine topfförmige Ausnehmung 11 ausgebildet ist. Beim Festziehen der nicht gezeigten Mutter 12 auf der Befestigungsschraube 7 verformt sich die in diesem Bereich ursprünglich plattenartige Montageplatte 4 konvex in Richtung der Ausnehmung 11 und stellt dadurch einen Formschluss zwischen der Montageplatte 4 und der Ausnehmung 11 her.

In der Figur 4 ist die Ausnehmung 11 mit trichterförmig aufgeweiteten Seitenwänden versehen. Die auf der Befestigungsschraube 7 aufgedrehte Mutter 12 weist eine zu den Seitenwänden der Ausnehmung 11 komplementäre konisch zulaufende Form auf und sorgt dadurch für einen besonders effektiven Formgebungsprozess der Montageplatte 4.

Die Figur 5 zeigt ein weiters Beispiel mit einem Formschlusselement 8 dar, welches als Dom 13 gegenüber der Unterseite 9 konvex vorsteht und mit einer speziell darauf abgestimmten Mutter 12 zusammenwirkt. Die Mutter 12 weist auf ihrer der Montageplatte 4 zugewandten Seite eine zu der Ausformung des Doms 13 komplementäre konkave Oberseite auf. Beim Festziehen der Mutter 12 auf der Befestigungsschraube 7 erfolgt dadurch eine Wölbung der Montageplatte 4 in diesem Abschnitt nach unten.

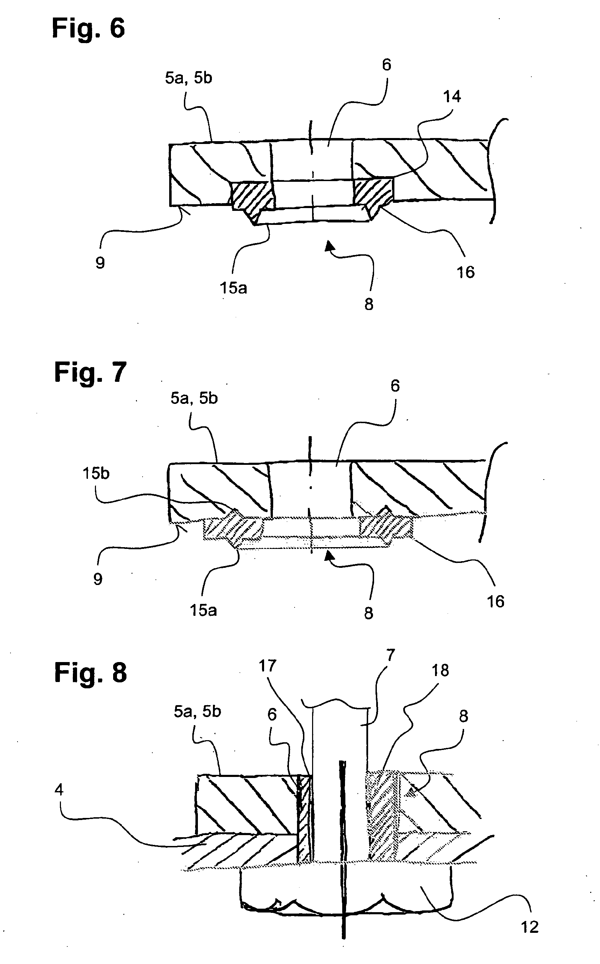

Bei den Ausführungsformen der Figuren 6 und 7 ist das Formschlusselement 8 nicht integraler Bestandteil des vorderen und/oder hinteren Endes 5a, 5b des Lagerbocks 1, sondern wird als separates Bauteil zwischen den Lagerbock 1 und die Montageplatte 4 vor der Montage eingelegt.

Hierfür ist bei der Ausführungsform gemäß der Figur 6 auf der Unterseite 9 eine Vertiefung 14 ausgebildet. Diese dient jedoch, anders als bei der Ausführungsform der Figuren 3 und 4, nicht dem Formgebungsprozess der Montageplatte 4, sondern der Aufnahme und seitlichen Fixierung einer Scheibe 16 mit einer in Richtung der Montageplatte ausgeformten Ringzacke 15a. Beim Anziehen einer in der Bohrung 6 eingesetzten Befestigungsschraube 7 über eine Mutter 12 (beides hier nicht gezeigt) wird die Ringzacke 15a in die Montageplatte 4 eingedrückt und stellt dadurch einen Formschluss her.

Die Ausführungsform der Figur 7 weist vor der Montage eine plane Unterseite 9 des Lagerbocks 1 auf. Auf diese wird dann als separates Bauteil eine Scheibe 16 gelegt, die zusätzlich zu der nach unten gerichteten Ringzacke 15a eine weitere identisch aufgebaute und nach oben gerichtete Ringzacke 15b umfasst. Beim Anziehen der Befestigungsschraube 7 und der Mutter 12 (beides in Figur 7 nicht gezeigt) stößt die untere Ringzacke 15a in die Montageplatte 4 und die obere Ringzacke 15b in die Unterseite 9 des Endes 5a, 5b.

Die Figur 8 verdeutlich eine weitere Möglichkeit eines zusätzlichen Formschlusselementes 8 in Form einer Passhülse 18, die spielfrei in die Bohrung 6 eingesetzt ist und sowohl durch das vordere beziehungsweise hintere Ende 5a, 5b des Lagerbocks 1 als auch durch die Montageplatte 4 hindurch reicht. Die Passhülse 18 liegt spielfrei an den Wandungen der Bohrung 6 an. Hierfür kann es notwendig sein, die Bauteile Lagerbock 1 und Montageplatte 4 während des Fertigungsprozesses lösbar miteinander zu verbinden und die Bohrung 6 in einem Arbeitsgang durch den Lagerbock 1 und die Montageplatte 4 einzubringen beziehungsweise nachzubearbeiten. Zwischen der Befestigungsschraube 7 und der Passhülse 18 sollte dagegen ein Ringspalt 17 verbleiben.

### Bezugszeichenliste

- 1: Lagerbock
- 2: Kupplungsplatte
- 3: Sattelkupplung
- 4: Montageplatte
- 5a: vorderes Ende Lagerbock
- 5b: hinteres Ende Lagerbock
- 6: Bohrung
- 7: Befestigungsschraube
- 8: Formschlusselement
- 9: Unterseite Lagerbock
- 10: Ringzacke
- 11: Ausnehmung um Bohrung
- 12: Mutter
- 13: Dom
- 14: Vertiefung
- 15a,b: Ringzacke
- 16: Scheibe
- 17: Ringspalt
- 18: Passhülse

## Patentansprüche

1. Anordnung eines Lagerbocks (1) einer Kupplungsplatte (2) auf einer Montageplatte (4), wobei der Lagerbock (1)
- eine brückenartige Form aufweist,
- an seinem gegenüber liegenden vorderen und hinteren Ende (5a, 5b) jeweils mit Bohrungen (6) zur Aufnahme von Befestigungsschrauben (7) versehen ist,
- mittels der Befestigungsschrauben (7) an der Montageplatte (4) ortsfest gehalten ist und
die Kupplungsplatte (2) in einem mittleren Bereich an dem Lagerbock (1) angreift, wobei die Befestigung des Lagerbocks (1) an der Montageplatte (4) zusätzlich mindestens ein Formschlusselement (8) umfasst,
**dadurch gekennzeichnet,**
**dass** der Lagerbock (1) lediglich im Bereich der Befestiaunasschrauben (7) aufliegt und in seinem mittleren Bereich freitragend und beabstandet zu der Montageplatte (4) ausgeformt ist und
**dass** das mindestens eine Formschlusselement (8) eine gegenüber der Unterseite (9) des Lagerbocks (1) vorstehende Ringzacke (10, 15a, 15b) ist, welche unmittelbar an dem Lagerbock (1) ausgebildet oder zwischen dem Lagerbock (1) und der Montageplatte (4) einsetzbar ist.

2. Anordnung nach Anspruch 1, **dadurch gekennzeichnet, dass** auf der Unterseite des Lagerbocks eine Vertiefung (14) ausgebildet ist, in welche eine mit der Ringzacke (15a) ausgeformte Scheibe (16) eingesetzt ist.

3. Anordnung nach Anspruch 1, **dadurch gekennzeichnet, dass** zwischen der Unterseite (9) des Lagerbocks (1) und der Montageplatte (4) eine mit einer doppelseitigen Ringzacke (15a, 15b) ausgeformte Scheibe (16) eingesetzt ist.

4. Anordnung nach Anspruch 2 oder 3, **dadurch gekennzeichnet, dass** die Scheibe (16) aus einem gehärteten Stahl gefertigt ist.

5. Anordnung nach einem der Ansprüche 1 bis 4, **dadurch gekennzeichnet, dass** die Ringzacke (10) und/oder die Scheibe (16) konzentrisch um mindestens eine der Bohrungen (6) angeordnet ist.

## Claims

1. Arrangement of a bearing support (1) of a coupling plate (2) on a mounting plate (4), the bearing support (1)
- having a bridge-like form,
- being provided in each case at its opposing front and rear ends (5a, 5b) with holes (6) for receiving securing screws (7),
- being held in a fixed manner on the mounting plate (4) by means of the securing screws (7), and
the coupling plate (2) engaging on the bearing support (1) in a central region, the securing of the bearing support (1) to the mounting plate (4) further comprising at least one positive-locking element (8),
**characterised in that**
the bearing support (1) is supported only in the region of the securing screws (7) and is formed in the central region thereof in an unsupported manner and with spacing from the mounting plate (4) and
**in that** the at least one positive-locking element (8) is an annular serration (10, 15a, 15b) which projects relative to the lower side (9) of the bearing support (1) and which is formed directly on the bearing support (1) or can be inserted between the bearing support (1) and the mounting plate (4).

2. Arrangement according to claim 1, **characterised in that** there is formed at the lower side of the bearing support a recess (14) in which a disc (16) which is formed with the annular serration (15a) is inserted.

3. Arrangement according to claim 1, **characterised in that**, between the lower side (9) of the bearing support (1) and the mounting plate (4), a disc (16) which is formed with a double-sided annular serration (15a, 15b) is inserted.

4. Arrangement according to claim 2 or 3, **characterised in that** the disc (16) is produced from a hardened steel.

5. Arrangement according to any one of claims 1 to 4, **characterised in that** the annular serration (10) and/or the disc (16) is/are arranged concentrically around at least one of the holes (6) .

## Revendications

1. Agencement d'un sabot d'appui (1) d'une platine d'attelage (2) sur une sellette de montage (4), sachant que ledit sabot d'appui (1)
- présente une configuration du type pontet,
- est pourvu, à ses extrémités antérieure et postérieure (5a, 5b) pointant à l'opposé, de perçages (6) conçus pour recevoir des boulons de fixation (7),
- est retenu sur ladite sellette de montage (4) avec assujettissement au moyen desdits boulons de fixation (7), et
sachant que ladite platine d'attelage (2) est en prise avec ledit sabot d'appui (1) dans une région centrale, la fixation dudit sabot d'appui (1) à ladite sellette de montage (4) comprenant, additionnellement, au moins un élément (8) d'assemblage par conformation,
**caractérisé par le fait**
**que** le sabot d'appui (1) repose uniquement par la région des boulons de fixation (7) et offre, dans sa région centrale, une configuration autoporteuse et distante de la sellette de montage (4) ; et
**que** l'élément (8) d'assemblage par conformation, à présence minimale, est une excroissance annulaire (10, 15a, 15b) faisant saillie au-delà de la face inférieure (9) du sabot d'appui (1) et ménagée directement sur ledit sabot d'appui (1), ou pouvant être insérée entre ledit sabot d'appui (1) et ladite sellette de montage (4).

2. Agencement selon la revendication 1, **caractérisé par le fait qu'**un renfoncement (14), dans lequel est inséré un disque (16) pourvu de l'excroissance annulaire (15a), est pratiqué à la face inférieure du sabot d'appui.

3. Agencement selon la revendication 1, **caractérisé par le fait qu'**un disque (16), doté d'une excroissance annulaire (15a, 15b) sur deux côtés, est inséré entre la sellette de montage (4) et la face inférieure (9) du sabot d'appui (1).

4. Agencement selon la revendication 2 ou 3, **caractérisé par le fait que** le disque (16) est fabriqué en un acier trempé.

5. Agencement selon l'une des revendications 1 à 4, **caractérisé par le fait que** l'excroissance annulaire (10), et/ou le disque (16), occupe(nt) une position concentrique autour d'au moins l'un des perçages (6).
